# EUROPÄISCHE PATENTSCHRIFT

(11) **EP 2 808 834 B1**
(45) Veröffentlichungstag und Bekanntmachung des Hinweises auf die Patenterteilung: **12.07.2017**
(21) Anmeldenummer: 13169735.1
(22) Anmeldetag: 29.05.2013
(51) Int. Cl.: G06Q 10/08

(54) **Verfahren und Vorrichtung zur Erkennung und Bestimmung der Anwesenheit von Objekten in Lagerstellen mithilfe eines Strichcodelesegeräts**
Method and apparatus for detecting and determining the presence of objects in storage facilities using a bar code reading device
Procédé et dispositif de détection et de détermination de la présence d'objets dans des emplacements de stockage à l'aide d'un lecteur de codes-barres

(43) Veröffentlichungstag der Anmeldung: 03.12.2014
(73) Patentinhaber: BDT Media Automation GmbH, 78628 Rottweil (DE)
(72) Erfinder: Reismann, Norbert, 78052 Villingen-Schwenningen (DE); Hauser, Stefan, 78727 Oberndorf am Neckar (DE)
(74) Vertreter: 2K Patentanwälte Blasberg Kewitz & Reichel

(56) Entgegenhaltungen:
- EP-A2- 0 843 293
- EP-A2- 1 519 375
- Aeneas Rooch: "Die JPEG-Kompression - von S.Wickenburg, A.Rooch und J.Groß", , 1 January 2002 (2002-01-01), XP055270024, Retrieved from the Internet: URL:http://www.mathematik.de/spudema/spude ma_beitraege/beitraege/rooch/nkap02.html [retrieved on 2016-05-02]
- Anonymous: "Barcodelesegerät - Wikipedia", , 31 March 2013 (2013-03-31), XP055270035, Retrieved from the Internet: URL:https://de.wikipedia.org/w/index.php?t itle=Barcodeleseger%C3%A4t&oldid=116290134 [retrieved on 2016-05-02]

## Beschreibung

Die Erfindung betrifft ein Verfahren und eine Vorrichtung zur Erkennung und zur Bestimmung der Anwesenheit von Objekten in Lagerstellen mithilfe eines Strichcodelesegeräts.

Im Rahmen der automatischen Lagerhaltung und -verwaltung von Objekten werden häufig Strichcodes zur Identifizierung der Objekte verwendet, da diese kostengünstig aufzudrucken bzw. über bedruckte Etiketten anbringbar sind. Ein wesentlicher Bestandteil automatischer Systeme zur Lagerhaltung und Lagerverwaltung von Objekten ist die Bestandsermittlung nach dem Einschalten, nach manuellen Eingriffen sowie im Rahmen von Ausnahmebehandlungen etc. Dazu werden in vorgenannten Systemen alle für die Bestandsermittlung notwendigen Lagerstellen, z.B. mit einem Roboter, der ein Strichcodelesegerät aufweist, automatisch angefahren und daraufhin wird versucht den jeweiligen Strichcode eines Objekts einzulesen. Nun gilt es zunächst zu unterscheiden, ob sich an der entsprechenden Lagerstelle ein Objekt befindet oder nicht. Ist ein Objekt vorhanden, dessen Strichcode identifiziert werden kann, wird das entsprechende Objekt anhand seines Strichcodes im Lagerverwaltungssystem mit der entsprechenden Lagerstelle verknüpft. Das Lagerverwaltungssystem ist oftmals eine Kontrolleinheit des Roboters oder mit dieser verbunden. In der Regel handelt es sich um einen Speicherbereich, in dem die erkannten Strichcodes in Verbindung mit einem Lagerort abgelegt werden. Grundsätzlich gibt es folgende Fälle:
a) das Objekt in der Lagerstelle ist mit einem Strichcode versehen, der identifiziert werden kann, dann wird dieser Strichcode im Lagerverwaltungssystem abgelegt;
b) es ist ein Objekt in der Lagerstelle ohne Strichcode, oder der Strichcode kann nicht erkannt werden, weil er z.B. nicht kompatibel ist oder beschädigt ist etc.
c) es ist kein Objekt in der Lagerstelle;

Befindet sich an der entsprechenden Lagerstelle ein Objekt, dessen Strichcode nicht erkannt werden kann, oder das über keinen Strichcode verfügt, besteht das Ziel darin, zu erkennen, ob die entsprechende Lagerstelle mit einem unbekannten Objekt belegt ist.
Sofern sich an der entsprechenden Lagerstelle kein Objekt befindet, sollte diese Lagerstelle im Verwaltungssystem als freie Lagerstelle verknüpft werden. Da das Lager oftmals dunkel ist und die Objekte uniforme Gegenstände sind, bedarf es einer Beleuchtungseinheit des Strichcodelesegeräts. Dieses ist oftmals mit einem Laserlicht, einer IR-, oder einer LED-Lichtquelle versehen, um die Objekte zu beleuchten. Strichcodelesevorrichtungen auf Basis von photosensiblen Medien, wie beispielsweise CCD-, oder CMOS-basierte Kameras oder Zeilenkameras, sind entsprechend einfach aufgebaut, um Strichcodes zu erkennen. Es gibt keine Bilderkennung im klassischen Sinne. Aus Kostengründen, soll eine Einheit verwendet werden, die im Wesentlichen nur auf die Erfassung von Strichcodes ausgerichtet ist. Aufgrund der sehr großen Packungsdichte in einer Lagerstelle, stimmen in manchen Anwendungen die freien Lagerstellen nahezu exakt mit den uniformen Objekten überein. Auch werden die Objekte zwar im gleichen physischen Format bereitgestellt, deren Farben können jedoch variieren. Ein konkretes Einsatzgebiet sind Speicherroboter oder auch Bandroboter, die ein oder mehrere Speicherlaufwerke besitzen, in die die Speichermedien zu transportieren sind, und wenn diese mit Daten beschrieben wurden, müssen die Bänder wieder zurück transportiert werden an ihre Lagerstelle. Derartige Speicherroboter werden beispielsweise in DE 10 2005 057 673, in DE 10 2005 054 560 B3, oder in US 7,184,242 B1 näher beschrieben.

### Stand der Technik

Aus US 5,450,385 A ist ein System bekannt, welches Lagerstellen für Informationsspeicherelemente mit maschinell lesbaren Markierungen, z.B. einem speziellen Strichcode, versieht, welcher sich an einer Position innerhalb der Lagerstelle befindet, welche durch ein Objekt verdeckt würde, sofern die Lagerstelle durch ein Objekt belegt würde.

US 5,814,171 A beschreibt ebenfalls ein System, welches Lagerstellen / Aufnahmevorrichtungen für Speichermedien mit optisch lesbaren Markierungen bzw. Prägungen in der Aufnahmevorrichtung versieht, welche nur im Fall einer leeren Aufnahmevorrichtung lesbar sind, da sie durch ein eingelagertes Objekt verdeckt würden.

Aus DE 600 29 668 T2 ist ein Verfahren und eine Vorrichtung bekannt, womit über ein optisches Erfassungssystem bestimmt werden kann, ob Objekte an vorbestimmten Positionen vorliegen. Dazu werden die Lagerstellen, welche die Positionen repräsentieren, an ihrer Rückseite mit Referenzoberflächen versehen, welche einen Kontrast zur restlichen Oberfläche der Rückwand einer Aufnahmevorrichtung hinsichtlich der Lichtreflexion herstellen.

Nachteilig an vorgenannten Systemen und Verfahren ist, dass sie:
i) auch für leere Lagerstellen zwingend Reflexion benötigen, was bedeutet, dass sie z.B. für offene Regalsysteme ungeeignet sind. Denn diese Reflexionen erfolgen durch Markierungen an der Rückwand der Lagerstelle oder durch die Rückwand selbst.
ii) in der Herstellung der Systeme aufwendigere Verfahrensschritte erfordern, da entsprechende Leerkennungen auf die Rückwände der Systeme angebracht werden müssen.

US 5,637,854 A beschreibt eine Vorrichtung und ein Verfahren zum Lesen von Strichcodes auf Reagenzgläsern. Die Erkennung der Anwesenheit von Elementen beruht auf der Auswertung des Spektrums des reflektierten Lichts. Dieses System ist geschaffen für den Einsatz in offenen Systemen ohne Rückwand, allerdings basiert es auf kohärenten Lichtquellen, wie beispielsweise LASER. LASER basierte Strichcodelesegeräte haben jedoch für den automatisierten Einsatz den Nachteil, nicht omni-direktional lesen zu können. Dies würde dementsprechend bedingen, Strichcodes immer in korrekter Ausrichtung aufgebracht zu haben, oder das Strichcodelesegerät, in mehreren Richtungen, nachführen zu müssen. Des Weiteren verfügen derartige Strichcodelesegeräte nicht über die Möglichkeit mehrdimensionale Strichcodes interpretieren zu können, was sich für viele Anwendungen zunehmend nachteilig auswirkt. Auch die Größe dieser Geräte lässt sich nur bedingt miniaturisieren, sodass LASER basierte Strichcodelesegeräte mitunter nicht die notwendigen Erfordernisse erfüllen können. Aus der EP 0 843 293 A2 ist ein Verfahren zur Erlangung von Preisen von Gegenständen bekannt. Die EP 1 519 375 A2 offenbart ein System zur optischen Erkennung von Barcodes, das Frequenzen bei der Barcode-Erkennung bestimmt.

### Überblick über die Erfindung

Die Aufgabe der Erfindung besteht darin, die Erkennung und die Bestimmung der Anwesenheit von Objekten in Lagerstellen für die automatische Lagerhaltung und -verwaltung von Objekten mithilfe eines Strichcodelesegeräts zu gewährleisten, welche sowohl für offene als auch für geschlossene Regal- / Trägersysteme geeignet ist und die nicht zwingend auf kohärentes Licht angewiesen ist. Dabei ist auch den Herstellungskosten in besonderer Weise Rechnung zu tragen, um auch den Einsatz in Systemen mit großen Stückzahlen zu ermöglichen, dementsprechend ist es u.a. das Ziel, handelsübliche Strichcodelesegeräte verwenden zu können, wie beispielsweise der CSE600 von Symbol bzw. Motorola, welcher sich auf die Maße H/B/T (7.35/19.75/9.66) Millimeter beschränkt und auf einer Zeilenkamera basiert. Die Ausleuchtung des Objekts wird dabei mit einer EN 60825-1 klassifizierten LED vorgenommen.
Weiterhin sollte sich die Erfindung nicht nur auf eindimensionale Strichcodes beschränken. Dementsprechend wäre es auch möglich, das vorgeschlagene Verfahren in Verbindung mit einem Kamera basierten Strichcodelesegerät, wie beispielsweise dem SE3300 von Motorola zu realisieren, welches ebenfalls sehr geringe Maße von H/B/T (17/30/17.3) Millimeter auszeichnen. Die Ausleuchtung wird hier über zwei EN 60825-1 klassifizierte Leuchtdioden vorgenommen.

### Definitionen

Unter Strichcode sind u.a. folgende maschinenlesbare Datensätze zu verstehen:
- Strichcode, wie bspw. EAN, IAN, JAN, UPC, ITF, ISBN, ISSN, etc.
- mehrdimensionaler Strichcode / Barcode, wie bspw. PDF417
- Matrixcodes
- Datamatrixcodes
- Punktcodes, z.B. QR-Codes

Diese Aufzählung ist nicht abschließend. Weitere Codes sind denkbar.

Kohärentes Licht bezeichnet elektromagnetische Strahlung, welche bezüglich der zeitlichen und räumlichen AusbreiLung eine feste Phasenbeziehung aufweist. Das heißt stark gebündeltes Licht möglichst gleicher Wellenlänge.

Elektromagnetische Strahlung jeglicher Wellenlänge wird in dieser Schrift als Licht bezeichnet.

Gelöst wird die Aufgabe durch eine Erfindung mit den Merkmalen der unabhängigen Ansprüche. Vorteilhafte Ausführungsformen ergeben sich aus den Unteransprüchen.

Im Einzelnen handelt es sich um ein Verfahren zur Erkennung und zur Bestimmung der Anwesenheit von Objekten in mindestens einer Lagerstelle, die keine spezielle Reflexionsfläche aufweisen, mithilfe eines auf einer Transporteinheit befestigten Strichcodelesegeräts, das mit einer Kontrolleinheit verbunden ist, die die Zuordnung von Objekten zur Lagerstelle verwaltet, umfassend die Schritte:
- automatisches Positionieren durch die Transporteinheit des Strichcodelesegeräts an der Lagerstelle,
- Versuch des Erkennens eines Strichcodes,
- falls die Erkennung nicht erfolgreich war, Versuch des Erkennens, ob ein Objekt in der Lagerstelle vorhanden ist, anhand von Informationen, aus denen sich ein Grauwert ableiten lässt,
- Bereitstellen des Ergebnisses an die Kontrolleinheit;
wobei das Strichcodelesegerät eine Vielzahl von photosensiblen Elementen aufweist und der Grauwert über die einzelnen photosensiblen Elemente gemittelt wird, und wobei vorzugsweise das Strichcödelesegerät ein lineares, oder mehrdimensionales digitales Bilddatensystem ist;
dadurch gekennzeichnet, dass die Lagerstellen aus schwarzem Kunststoff gefertigt sind, der schwarze Kunststoff zumindest an der Rückwand eine schwarze, texturierte Fläche oder eine Fläche aufweist, die verhinder, dass Licht zu einem Empfangsteil des Strichcodelesegeräts reflektiert wird.

In einer bevorzugten Ausführungsform wird eine Strichcodelesevorrichtung mit fester Belichtungszeit verwendet. Die Belichtungszeit kann dabei in einem Bereich von Bruchteilen einer Mikrosekunde, bis zu mehreren Millisekunden variieren, typischerweise liegt die Belichtungszeit allerdings zwischen 30 Mikrosekunden und 20 Millisekunden.
Alternativ dazu umfasst eine besonders bevorzugte Ausführungsform eine Strichcodelesevorrichtung mit automatischer Belichtungskontrolle. Derartige Strichcodelesevorrichtungen passen die Belichtungszeit automatisch an die Signalqualität an, mit dem Ziel, den mittleren Grauwert, welcher über die Zellen / Elemente / Pixel eines photosensiblen Mediums ermittelt wird (vorzugsweise eine Vielzahl von diesen Zellen), immer auf ein bestimmtes Niveau anzupassen. Dementsprechend würde eine leere Lagerstelle sehr lange belichtet, da nur sehr wenig Licht reflektiert wird. Wohingegen ein Objekt in einer Lagerstelle bedeutend mehr Licht reflektiert, was demzufolge einen höheren Grauwert und daher eine kürzere Belichtungszeit bewirkt.
Eine bevorzugte Ausführung der Erfindung umfasst weiterhin Antriebe, Getriebe und Führungen, oder einen Roboter, um die Strichcodelesevorrichtung vor die Lagerstellen positionieren zu können.
Die Lagerstellen sollten in einer Weise gestaltet sein, welche möglichst wenig Licht in Richtung des photosensiblen Mediums des Strichcodelesegeräts reflektiert. Dies kann beispielsweise durch eine Lagerstelle aus schwarzem Kunststoff erreicht werden, welche nur nach einer Seite, die dem Strichcodelesegerät bzw. dem Roboter zugewandte, geöffnet ist, da hier die Gesetze des schwarzen Strahlers herangezogen werden können, wobei elektromagnetische Strahlung, also auch Licht, weitgehend in Wärme umgewandelt und somit an die Umgebung abgegeben wird.
In einer besonders bevorzugten Ausführungsform weist die Lagerstelle neben dem schwarzen Material eine Textur, wie beispielsweise Mold-Tech 11006 mit einer gemittelten Rautiefe R_{Z} von 0,25 Millimeter und einer maximalen Einzelrautiefe R_{M} von 3,05 Millimeter, oder eine raue Oberfläche des Kunststoffs auf, welche aufgrund der Dichte und Tiefe der Struktur geeignet ist gerichtetes Licht in Streulicht zu wandeln, und daher weniger Licht am photosensiblen Medium zur Erfassung des Strichcodes ankommt. Es ist aber auch denkbar eine Lagerstelle heranzuziehen, welche lediglich auf einer Ablage bzw. einem Fachboden, ohne Seiten- und Rückwand, basiert und die daher keine Reflexionsflächen bezüglich des vom Lesegerät emittierten Lichts aufweist. Hierbei liegt das Objekt lediglich auf dem Fachboden auf.

Die Strichcodelesevorrichtung wird mithilfe der Antriebe, Getriebe und Führungen, bzw. dem Roboter, vor einer Lagerstelle positioniert und über die übergeordnete Kontrolleinheit angesteuert. Dabei ergeben sich drei mögliche Fälle:
a) Die Lagerstelle enthält ein Objekt, dessen Strichcode gelesen und dekodiert werden kann.
b) Es befindet sich ein Objekt in der Lagerstelle, dessen Strichcode nicht gelesen werden kann, oder welches über keinen Strichcode verfügt.
c) Die Lagerstelle ist leer.

Für den Fall a) würde die Strichcodelesevorrichtung der übergeordneten Kontrolleinheit den dekodierten Strichcode zur Verfügung stellen. Die Kontrolleinheit würde daraufhin einen Querbezug zwischen der ausgewählten Lagerstelle und dem ermittelten Strichcode herstellen, um das Objekt, welches durch den Strichcode repräsentiert wird, jederzeit eindeutig im System wiederfinden zu können.

In einer bevorzugten Ausführungsform wird eine Strichcodelesevorrichtung mit fester Belichtungszeit verwendet. Bei derartigen Vorrichtungen wird ein photosensibles Medium, wie beispielsweise eine CCD-, oder CMOS-basierte Kamera oder Zeilenkamera, für eine feste Zeitspanne belichtet. Die Belichtungszeit kann dabei in einem Bereich von Bruchteilen einer Mikrosekunde, bis zu mehreren Millisekunden variieren, typischerweise liegt die Belichtungszeit allerdings zwischen 30 Mikrosekunden und 20 Millisekunden. Dabei steigt der Grauwert mit der Lichtmenge, die das photosensible Medium innerhalb dieser Zeit aufnimmt. Da derartige Lesegeräte i.d.R. über mehrere Zellen / Elemente / Pixel eines photosensiblen Mediums verfügen, dient der mittlere Grauwert über die entsprechenden Zellen / Elemente / Pixel, als aussagekräftiges Maß. Für die, in [15] beschriebenen, Fälle b) und c) stellt die Strichcodelesevorrichtung der übergeordneten Kontrolleinheit den mittleren Grauwert, welcher über alle Pixel / Zellen gemittelt wurde, zur Verfügung. Der mittlere Grauwert wird nun wiederum in der Kontrolleinheit evaluiert. Der Grauwert einer leeren Lagerstelle c) unterscheidet sich signifikant vom Grauwert, welcher sich aufgrund von b) ergibt, da im Fall von b) bedeutend mehr Licht reflektiert wird, was sich in einem höheren Grauwert ausdrückt. Dementsprechend kann der Grauwert zu Rückschlüssen über die Anwesenheit eines Objekts innerhalb einer Lagerstelle herangezogen werden.

In einer besonders bevorzugten Ausführungsform wird eine Strichcodelesevorrichtung mit automatischer Belichtungskontrolle, wie beispielsweise in US 8, 141, 821 B2, oder EP 2,414,988 A1 beschrieben eingesetzt. Eine solche Strichcodelesevorrichtung mit automatischer Belichtungskontrolle für eine Zeilenkamera bietet beispielsweise der CSE600 von Symbol bzw. Motorola. Derartige Strichcodelesevorrichtungen passen die Belichtungszeit automatisch an die Signalqualität an, mit dem Ziel den mittleren Grauwert immer auf ein bestimmtes Niveau anzupassen. Dementsprechend würde eine leere Lagerstelle sehr lange belichtet, da nur sehr wenig Licht reflektiert wird. Für den, in [15] beschriebenen, Fall b) würde bedeutend mehr Licht reflektiert als für c), was demzufolge einen höheren Grauwert und daher eine kürzere Belichtungszeit erwirkt. Vorgenanntes gilt im Übrigen selbst für den Fall, dass sich ein schwarzes Objekt ohne Strichcode in der Lagerstelle befindet. Dementsprechend würden für b) bedeutend höhere Grauwerte und damit signifikant kürzere Belichtungszeiten erreicht, als für c). Als logische Konsequenz muss die Strichcodelesevorrichtung mit automatischer Belichtungskontrolle der übergeordneten Kontrolleinheit für die Fälle b) und c) die Belichtungszeit übergeben. Diese ist dann anhand der Evaluierung der Belichtungszeit in der Lage, für den Fall b) einen Querbezug herzustellen, dass die gegenwärtig ausgewählte Lagerstelle ein optisch nicht näher identifizierbares Objekt enthält, während der Fall c) als freie Lagerstelle bereitgestellt wird. Die Strichcodelesevorrichtung stellt die Möglichkeit bereit, die Belichtungszeit abzurufen bzw. abzufragen, oder übergibt diese von sich aus. Dies kann über die gleiche Schnittstelle erfolgen, wie zur Übermittlung der Strichcodeinformationen.

Es sollte für den Durchschnittsfachmann offensichtlich sein, dass es natürlich möglich ist, das Verfahren auch direkt in der Strichcodelesevorrichtung auszuführen, welche dann statt des Grauwerts bzw. der Belichtungszeit die entsprechende Meldung für eine leere Lagerstelle c), oder die Anwesenheit eines nicht näher identifizierbaren Objekts b) an die übergeordnete Steuereinheit übergibt.

Die Erfindung findet ihre Anwendung in Systemen zur automatischen Lagerhaltung und -verwaltung von Objekten, wie es beispielsweise bei automatischen Medienaustauschvorrichtungen für die Verwaltung, den Austausch und den Wechsel von Datenträgern sowie das automatische Aufnehmen und Abspielen von Daten auf Datenträgern der Fall ist.
Ein weiteres Anwendungsgebiet sind Kommissionierautomaten, die beispielsweise in Apotheken zunehmend Einzug erhalten. Auch hier gilt es Objekte automatisiert einzulesen, einzulagern, auszugeben und den Bestand korrekt zu verwalten.
Weiterhin ist die Anwendung des Verfahrens auch in automatischen Selbstbedienungskassen denkbar, da hier entweder ein Sensor, oder ein Teil der Bildverarbeitung eingespart werden könnten, sofern diese lediglich dazu eingesetzt wird, zu erkennen, ob tatsächlich ein oder mehrere Objekte vorhanden sind.
Auch in automatisierten Druckweiterverarbeitungsmaschinen können Strichcodes dazu verwendet werden, einen bestimmten Weiterverarbeitungsprozesses auszuwählen. Auch an dieser Stelle kann mindestens ein Sensor eingespart werden, sofern die Strichcodelesevorrichtung oder die übergeordnete Kontrolleinheit in der Lage ist, zu unterscheiden, ob lediglich kein Strichcode identifiziert werden konnte, oder ob überhaupt kein Objekt vorhanden ist.
Aufgrund der Notwendigkeit kostenoptimierte Abläufe im Gesundheitswesen zu betrachten, erhalten immer mehr automatisierte Prozesse Einzug in diesem Bereich. Beispielhaft sei an dieser Stelle die Automatisierung von Laborabläufen / -systemen genannt. Auch in diesem Bereich hat die vorgeschlagene Erfindung deutliche Vorteile, da hier zunehmend mehrdimensionale Strichcodes eingesetzt werden, um mehr Daten auf kleiner Fläche zur Verfügung zu stellen und die Möglichkeit der Verschlüsselung von Daten bereitzustellen. Auch hier ist von besonderem Interesse, sicher zu sein, ob eine Lagerstelle frei, oder belegt ist, sofern der Strichcode nicht gelesen werden konnte. Vorgenanntes lässt sich auf weitere Laborautomatisierungssysteme übertragen, welche sich neben der Automatisierung von Laborprozessen für den medizinischen Bereich auch mit Laborprozessen im Bereich der Pharma-, Bio-, Chemie- und Lebensmitteltechnologie befassen.

Die vorgenannten Beispiele sind exemplarisch zu betrachten, darüber hinaus gibt es natürlich bedeutend mehr Anwendungen, welche auf Systeme zur automatischen Lagerhaltung und Lagerverwaltung von Objekten zurückgreifen und für die die Erkennung und Bestimmung der Anwesenheit dieser Objekte elementarer Bestandteil ist.

In einer bevorzugten Ausführungsform sind die Lagerstellen aus schwarzem Kunststoff gefertigt, um möglichst wenig Licht in Richtung des photosensiblen Mediums des Strichcodelesegeräts zu reflektieren. Des Weiteren können hierbei die Gesetze des schwarzen Strahlers herangezogen werden, wobei elektromagnetische Strahlung, also auch Licht, weitgehend in Wärme umgewandelt und somit an die Umgebung abgegeben wird.

In einer besonders bevorzugten Ausführungsform weist das schwarze Material zumindest an der Rückwand eine Textur auf, welche aufgrund der Dichte und Tiefe der Struktur geeignet ist gerichtetes Licht in Streulicht zu wandeln, um möglichst wenig Licht in Richtung des photosensiblen Mediums zur Erfassung des Strichcodes zu reflektieren.

Eine besonders vorteilhafte Ausführungsform der Erfindung verfügt daher über eine Textur mit einer gemittelten Rautiefe R_{Z} von 0,25 Millimeter und einer maximalen Einzelrautiefe R_{M} von 3,05 Millimeter, da diese Textur über eine Struktur verfügt, deren Dichte und Tiefe bezüglich der verwendeten LEDs zur Beleuchtung der Medien das Licht ausreichend gut streut und damit für ausreichend Spielraum zur Unterscheidung mithilfe von Grauwert- bzw. Belichtungszeitschwellwerten erzielt werden.

In einer bevorzugten Ausführungsform der Erfindung weist das Strichcodelesegerät eine Vielzahl von photosensiblen Elementen auf und der Grauwert wird über die einzelnen photosensiblen Elemente gemittelt, da der mittlere Grauwert über mehrere Elemente eine Aussage zulässt, ob und wie viel Licht gezielt reflektiert wurde. Damit verbunden kann eine Aussage getroffen werden, ob sich ein Objekt in der Lagerstelle befindet, oder nicht.

In einer besonders bevorzugten Ausführungsform ist das Strichcodelesegerät ein lineares, oder mehrdimensionales digitales Bilddatensystem, da somit auf den Einsatz kohärenter Lichtquellen, wie beispielsweise LASER, verzichtet werden kann, da LASER basierte Strichcodelesegeräte für den automatisierten Einsatz den Nachteil haben, nicht omni-direktional lesen zu können. Dies würde dementsprechend bedingen, Strichcodes immer in korrekter Ausrichtung aufgebracht zu haben, oder das Strichcodelesegerät, in mehreren Richtungen, nachführen zu müssen, was wiederum komplizierte mechanische Aufbauten mit erhöhter Verschleißanfälligkeit zur Folge hat. Des Weiteren verfügen derartige Strichcodelesegeräte nicht über die Möglichkeit mehrdimensionale Strichcodes interpretieren zu können, was sich für viele Anwendungen zunehmend nachteilig auswirkt. Auch die Größe dieser Geräte lässt sich nur bedingt miniaturisieren, sodass LASER basierte Strichcodelesegeräte mitunter nicht die notwendigen Erfordernisse erfüllen können. So beansprucht der CSE600 von Symbol bzw. Motorola, lediglich Maße von H/B/T (7.35/19.75/9.66) Millimeter und basiert auf einer Zeilenkamera. Die Ausleuchtung des Objekts wird dabei mit einer EN 60825-1 klassifizierten LED vorgenommen.
Um nicht nur auf eindimensionale Strichcodes beschränkt zu sein, ließe sich das erfindungsgemäß vorgeschlagene Verfahren auch mit einem Kamera basierten Strichcodelesegerät, wie beispielsweise dem SE3300 von Motorola realisieren, welches ebenfalls sehr geringe Maße von H/B/T (17/30/17.3) Millimeter auszeichnen. Die Ausleuchtung wird hier über zwei EN 60825-1 klassifizierte Leuchtdioden vorgenommen.

In einer bevorzugten Ausführungsform arbeitet das Strichcodelesegerät mit einer festen Belichtungszeit und die Informationen, aus denen sich der Grauwert ableiten lässt, ist der Grauwert selbst, wobei, wenn der Grauwert einen bestimmten Schwellwert unterschreitet, dann ist von einer leeren Lagerstelle auszugehen. Bei derartigen Vorrichtungen wird ein photosensibles Medium, wie beispielsweise eine CCD-, oder CMOS-basierte Kamera oder Zeilenkamera, für eine feste Zeitspanne belichtet. Die Belichtungszeit kann dabei in einem Bereich von Bruchteilen einer Mikrosekunde, bis zu mehreren Millisekunden variieren, typischerweise liegt die Belichtungszeit allerdings zwischen 30 Mikrosekunden und 20 Millisekunden. Dabei steigt der Grauwert mit der Lichtmenge, die das photosensible Medium innerhalb dieser Zeit aufnimmt. Da derartige Lesegeräte i.d.R. über mehrere Zellen / Elemente / Pixel eines photosensiblen Mediums verfügen, dient der mittlere Grauwert über die entsprechenden Zellen / Elemente / Pixel, als aussagekräftiges Maß. Der Grauwert einer leeren Lagerstelle unterscheidet sich signifikant vom Grauwert eines Objekts ohne Strichcode. Dies ergibt sich aufgrund dessen, dass in Lagerstellen, die nur nach der dem Strichcodelesegerät bzw. dem Roboter zugewandten Seite, geöffnet ist, der Versuch besteht, auftreffendes Licht in Streulicht zu wandeln, weshalb hier deutlich geringere mittlere Grauwerte zu erwarten sind. In offenen Regalträgersystemen, die lediglich mindestens über eine Ablage bzw. einen Fachboden verfügen, ohne Rück- und/oder Seitenwand, und die daher keine Reflexionsflächen bezüglich des vom Lesegerät emittierten Lichts aufweisen, wird offensichtlich von einem Objekt, welches auf dem Fachboden aufliegt bedeutend mehr Licht reflektiert, was sich in einem höheren Grauwert ausdrückt, als von einer leeren Lagerstelle. Dementsprechend kann der Grauwert zu Rückschlüssen über die Anwesenheit eines Objekts innerhalb einer Lagerstelle herangezogen werden.

In einer besonders bevorzugten Ausführung der Erfindung arbeitet das Strichcodelesegerät mit einer automatischen Belichtungskontrolle und die Informationen, aus denen sich der Grauwert ableiten lässt, ist die Belichtungszeit, wobei wenn die Belichtungszeit einen bestimmten Schwellwert überschreitet, dann ist von einer leeren Lagerstelle auszugehen. Strichcodelesevorrichtungen mit automatischer Belichtungskontrolle passen die Belichtungszeit automatisch an die Signalqualität an, mit dem Ziel den mittleren Grauwert immer auf ein bestimmtes Niveau anzupassen. Dementsprechend würde eine leere Lagerstelle sehr lange belichtet, da nur sehr wenig Licht reflektiert wird, was demzufolge einen geringen Grauwert pro Zeiteinheit und daher eine lange Belichtungszeit zur Folge hat.

In einer bevorzugten Ausführungsform überträgt das Strichcodelesegerät die Belichtungszeit, oder den Grauwert über eine Schnittstelle an eine übergeordnete Kontrolleinheit, und die übergeordnete Kontrolleinheit nimmt die Überprüfung des Schwellwertes vor. Da die Möglichkeit besteht, dass die Kontrolleinheit, welche die Strichcodeerkennung vornimmt, dieselbe ist, welche auch die Lagerverwaltung übernimmt, wäre die Schnittstelle in diesem Fall lediglich eine SW Schnittstelle und der Wortlaut übergeordnete Kontrolleinheit wäre diesbezüglich auf die Architektur der SW bezogen und nicht auf physikalisch getrennte Kontrolleinheiten. Für den Fall, dass mehrere physikalische Kontrolleinheiten vorliegen, könnte die Schnittstelle, welche zum Austausch der Belichtungszeit, oder des Grauwerts herangezogen würde, eine oder mehrere der folgenden sein: gemeinsamer Speicher, serielle Schnittstelle, RS232, RS485, smart serial Interface (SSI), CAN, CANopen, Ethernet, WLAN, NFC, IIC, IR, etc.

In einer besonders bevorzugten Ausführung werden sowohl Informationen über den erkannten Strichcode, als auch die Belichtungszeit oder der Grauwert über dieselbe Schnittstelle übermittelt, so dass es lediglich einer Protokollerweiterung bedarf, nicht aber einer zusätzlichen Schnittstelle.

In einer möglichen Ausführungsform ist das Strichcodelesegerät auf einer Transporteinheit montiert. Dies erlaubt es das Strichcodelesegerät, in Lagerverwaltungssystemen, die mehr als eine Lagerstelle aufweisen, automatisiert an den jeweiligen Lagerstellen zu positionieren, um beispielsweise die Bestandsermittlung vorzunehmen.

In einer möglichen Ausführungsform ist die Transporteinheit ein Roboter. Ein Beispiel für einen Roboter, welcher ein Strichcodelesegerät mitführt, wird in DE 10 2005 054 560 beschrieben.

In einer besonders bevorzugten Ausführungsform ist das Verfahren Teil eines Systems zur automatischen Lagerhaltung und Lagerverwaltung von Objekten ist.

Mögliche Ausführungsformen für ein System zur automatischen Lagerhaltung und Lagerverwaltung von Objekten stellen u.a. folgenden Systeme dar:
- automatische Medienaustauschvorrichtung, wie bspw. Bandspeicherbibliothekssysteme, Wechselsysteme für optische Medien, Festplattenwechselsysteme etc.
- ein Kommissionierautomat bzw. ein Kommissioniersystem, dies kann automatisierte Geräte zur Ein- / und Auslagerung und zur Lagerverwaltung von Objekten betreffen, wie sie bspw. in Apotheken, Versandhandelszentren, Frachtumschlagszentren usw. zu finden sind
- eine Selbstbedienungskasse
- eine Druckmaschine oder Druckweiterverarbeitungsmaschine
- ein Laborautomatisierungssystem, dies betrifft u.a. die Automatisierung von Laborprozessen im Bereich der Medizin-, Pharma-, Bio-, Chemie- und Lebensmitteltechnologie

Eine besonders bevorzugte Ausführung der Erfindung verfügt über ein Strichcodelesegerät zur Erkennung von Objekten in mindestens einer Lagerstelle, die keine spezielle Reflexionsfläche aufweist. Das Strichcodelesegerät ist mit einer Kontrolleinheit verbunden, die die Zuordnung von Objekten zur Lagerstelle verwaltet. Darüber hinaus sind das Strichcodelesegerät und die Kontrolleinheit in der Lage weitere Daten auszutauschen, wie z.B. den ermittelten mittleren Grauwert, oder die Belichtungszeit. Damit ermöglicht das System, bestehend aus Strichcodelesegerät und Kontrolleinheit, die Bestimmung der Anwesenheit eines Objekts in einer Lagerstelle für den Fall das kein Strichcode ermittelt werden konnte, da ein Objekt, welches sich in einer Lagerstelle befindet, bedeutend mehr Licht reflektiert, was sich in einem höheren Grauwert ausdrückt, als eine leere Lagerstelle. Strichcodelesevorrichtungen mit automatischer Belichtungskontrolle passen die Belichtungszeit automatisch an die Signalqualität an, mit dem Ziel den mittleren Grauwert immer auf ein bestimmtes Niveau anzupassen. Dementsprechend würde eine leere Lagerstelle sehr lange belichtet, da nur sehr wenig Licht reflektiert wird, was demzufolge einen geringen Grauwert pro Zeiteinheit und daher eine lange Belichtungszeit zur Folge hat. Das Bestreben von Lagerhaltungs- und Lagerverwaltungssystemen liegt darin Lagerstellen korrekt verwalten zu können, sprich eine Aussage treffen zu können, ob sich ein Objekt an einer Lagerstelle befindet, unabhängig davon, ob ein Strichcode erkannt werden konnte. Daher werden in einer vorteilhaften Ausführung der Erfindung vorzugsweise folgende Schritte durchgeführt:
- Versuch des Erkennens eines Strichcodes,
- falls die Erkennung nicht erfolgreich war, Versuch des Erkennens, ob ein Objekt in der Lagerstelle vorhanden ist, anhand von Informationen, aus denen sich ein Grauwert ableiten lässt,
- Bereitstellen des Ergebnisses an die Kontrolleinheit.

Ein weiterer Teil der Erfindung stellt eine Vorrichtung bereit, die entsprechend ausgebildet ist, um das oben genannte Verfahren umzusetzen.

Die Erfindung hat insbesondere dort Vorteile, wo Reflexionsflächen auf der gegenüberliegenden Seite der Strichcodelesevorrichtung entweder nicht möglich oder nur unter großem Aufwand anbringbar sind, oder diese den Herstellungsaufwand unnötig verteuern würden. Weiterhin bietet das Verfahren Einsparpotential, da anhand des vorgeschlagenen Verfahrens mindestens ein weiterer Sensor zur Bestimmung der Anwesenheit eines Objekts bzw. eine Bilddatenverarbeitung, die dasselbe Ziel verfolgt, hinfällig sind.

Die Erfindung wird anhand der nachfolgenden Figuren ausführlich erläutert. Es zeigen:
Fig. 1: Strichcodelesegerät
Fig. 2: Greifersystem mit Strichcodelesegerät
Fig. 3: Ausschnitt einer Vorrichtung zur automatischen Lagerhaltung und - verwaltung von Datenträgern, ein Greifersystem mit Strichcodelesegerät, umfassend
Fig. 4: Schematische Darstellung einer Vorrichtung zur automatischen Lagerhaltung und -verwaltung mit offenem Regal- / Trägersystem, ein Greifersystem mit Strichcodelesegerät, umfassend
Fig. 5: Anleger eines automatisierten Druckweiterverarbeitungssystems
Fig. 6: Ablaufdiagramm bei der Verwendung einer Strichcodelesevorrichtung mit automatischer Belichtungskontrolle
Fig. 7: Ablaufdiagramm bei der Verwendung einer Strichcodelesevorrichtung mit fester Belichtungszeit
Fig. 8: Diagramm der reflektierten Lichtmenge eines gelben Datenträgers, wobei der Grauwert über den Elementen / Zellen / Pixel eines photosensiblen Mediums aufgezeichnet wurde.
Fig. 9: Diagramm der reflektierten Lichtmenge eines schwarzen Datenträgers, wobei der Grauwert über den Elementen / Zellen / Pixel eines photosensiblen Mediums aufgezeichnet wurde.
Fig. 10: Diagramm der reflektierten Lichtmenge einer leeren, nur einseitig, in Richtung des Strichcodelesegeräts geöffneten Lagerstelle, wobei der Grauwert über den Elementen / Zellen / Pixel eines photosensiblen Mediums aufgezeichnet wurde.
Fig. 11: Tabelle, welche die mittleren Grauwerte der verschiedenen Objekte aus Fig. 8 bis Fig. 10 bei einer festen Belichtungszeit von zwei Millisekunden darstellt.
Fig. 12: Tabelle, welche die mittleren Grauwerte, die mittleren Grauwerte bezogen auf die Belichtungszeit und die Belichtungszeit der verschiedenen Objekte aus Fig. 8 bis Fig. 10 für eine Strichcodelesevorrichtung mit automatischer Belichtungskontrolle darstellt.

### Detaillierte Beschreibung der Erfindung

In den Figuren bezeichnen gleiche Bezugsziffern gleiche oder funktionsgleiche Teile, wobei zur besseren Übersicht nicht sämtliche Bezugsziffern in sämtlichen Figuren angegeben sind.

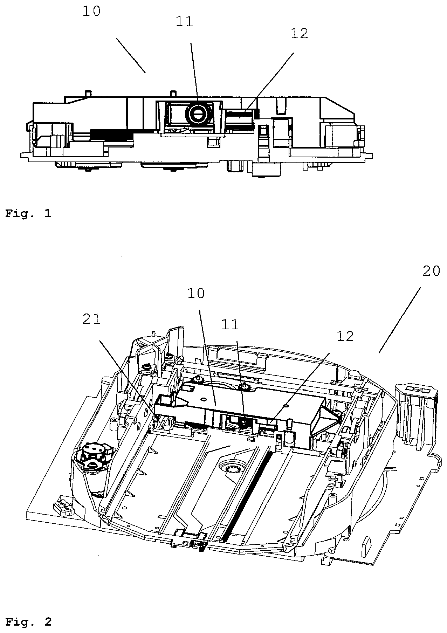

Fig. 1 zeigt ein Strichcodelesegerät 10, welches eine Empfangseinheit zur Erfassung des Strichcodes 11 sowie vorzugsweise eine separate Beleuchtungseinheit 12 umfasst. In einer bevorzugten Ausführungsform wird die Empfangseinheit zur Erfassung des Strichcodes 11 durch ein digitales Bilddatensystem repräsentiert und die Beleuchtungseinheit 12 durch eine Leuchtdiode. Üblicherweise ist in derartigen Strichcodelesegeräten 10 bereits eine Einheit zur Auswertung der empfangenen Signale und eine Kommunikationsschnittstelle zur Weitergabe der ausgewerteten Signale beinhaltet und wird in der Regel durch einen Mikrocontroller realisiert. Daher ist es durchaus möglich das vorgeschlagene Verfahren auch innerhalb dieses Mikrocontrollers zu implementieren und statt eines Grauwerts, oder einer Belichtungszeit direkt Signale zu definieren, welche die Fälle b) und c) aus [15] eindeutig darstellen.
Eine weitere Möglichkeit wäre auf ein digitales Bilddatensystem ohne Dekodiereinheit zurückzugreifen und die Dekodierung direkt auf einem übergeordneten Controller durchzuführen. Im Gegensatz zu deutlich größeren LASER basierten Scannersystemen lässt sich eine derartige Lösung auf einem digitalen Bilddatensystem mit beispielhaften Maßen von H/B/T (8/38/12) Millimetern realisieren.

Ein Greifersystem 20 mit Strichcodelesegerät 10, wie beispielhaft in Fig. 2 vorgeschlagen, wird üblicherweise in Lagerhaltungs- und Lagerverwaltungssystemen verwendet, um Objekte in Lagerhaltungs- und Lagerverwaltungssystemen einzulagern bzw. aus Lagerhaltungs- und Lagerverwaltungssystemen auszulagern. Dazu wird ein Objekt mithilfe der Greiferzangen 21 von einem Übergabeort auf das Greifersystem 20 gezogen, bis vor ein entsprechendes Ziel befördert, um dann wiederum mithilfe der Greiferzangen 21 vom Greifersystem an das Ziel, z.B. eine Lagerstelle, übergeben zu werden.

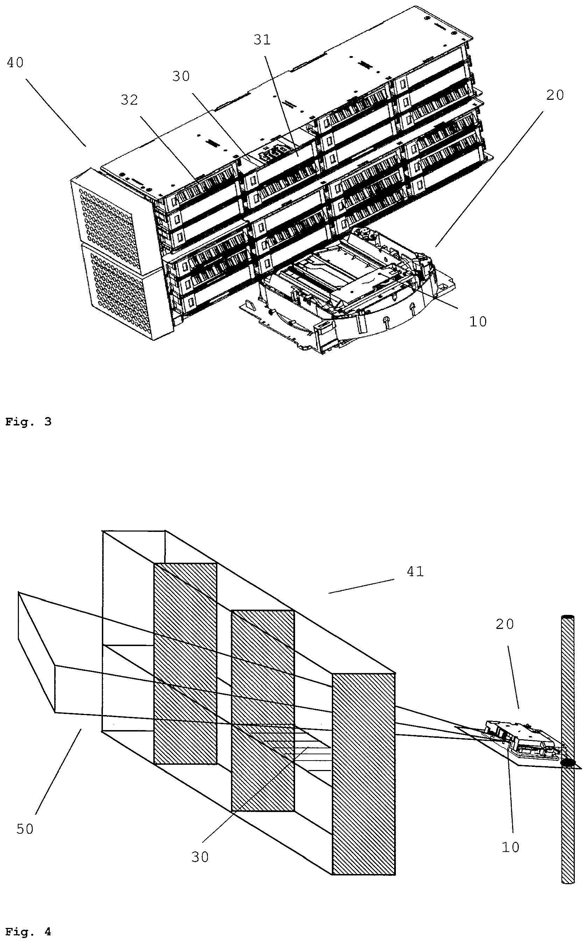

Fig. 3 stellt einen Ausschnitt einer Vorrichtung zur automatischen Lagerhaltung und -verwaltung von Datenträgern dar und zeigt damit ein mögliches Beispiel für die Verwendung eines Greifersystems 20 aus Fig. 2. Vorrichtungen zur automatischen Lagerhaltung und -verwaltung von Datenträgern werden in der Regel für Sicherheitskopien und zur Archivierung von Datenbeständen verwendet. Dazu werden derartige Systeme für gewöhnlich in Speichernetzstrukturen eingebunden und über Server angesteuert. Ziel ist es, selten benötigte Daten auf günstigere Medien, wie bspw. Magnetbänder, auszulagern, oder Sicherungskopien abzulegen, um gegebenenfalls Notfallszenarien gezielt begegnen zu können. Dazu werden innerhalb einer Vorrichtungen zur automatischen Lagerhaltung und -verwaltung von Datenträgern mehrere Datenträger verwaltet, welche im Fall eines Zugriffswunschs mithilfe des Greifersystems 20 aus einer Lagerstelle eines Magazins 40, in ein Laufwerk befördert werden, um daraufhin Daten vom bzw. auf den Datenträger lesen / schreiben zu können. Ist der Lese- bzw. Schreibvorgang beendet kann der Datenträger wieder in eine leere Lagerstelle 30 im Magazin 40 befördert und verwahrt werden. Um eine eindeutige Zuordnung zu schaffen, wo sich welcher Datenträger befindet und damit die Daten wiederherstellen zu können, werden die Datenträger in der Regel mit Strichcodes versehen. Somit kann beispielsweise im Server eine Zuordnung eines Strichcodes mit bestimmten Datensätzen geschaffen werden.
Nach dem Einschalten, nach manuellen Eingriffen sowie im Rahmen von Ausnahmebehandlungen etc. muss daher eine Bestandsermittlung durchgeführt werden. Dazu werden alle für die Bestandsermittlung notwendigen Lagerstellen, durch das Greifersystem 20, angefahren und daraufhin wird versucht, mithilfe des Strichcodelesegeräts 10, den jeweiligen Strichcode eines Datenträgers einzulesen. Da es, wie in Fig. 3 dargestellt, innerhalb eines Magazins 40, sowohl leere Lagerstellen 30, Lagerstellen 30 mit Objekten ohne Strichcode 31 sowie Lagerstellen 30 mit Strichcode gekennzeichneten Objekten 32 gibt, gilt es zunächst zu unterscheiden, ob sich in der entsprechenden Lagerstelle 30 überhaupt ein Objekt befindet. Dementsprechend wird die jeweilige Lagerstelle 30 im ersten Schritt beleuchtet und anhand des reflektierten Lichts wird dann ein Bild bzw. ein Bildausschnitt erstellt. Daraus versucht das Strichcodelesegerät 10 daraufhin einen Strichcode zu erkennen.
In einer bevorzugten Ausführung sind die Lagerstellen 30 aus schwarzem Kunststoff gefertigt und nur nach einer Seite, in Richtung des Greifersystems 20 geöffnet, da hier die Gesetze des schwarzen Strahlers herangezogen werden können, wobei elektromagnetische Strahlung, also auch Licht, mindestens zu einem Teil in Wärme umgewandelt und derart an die Umgebung abgegeben wird.
In einer besonders bevorzugten Ausführungsform weist die Lagerstelle neben dem schwarzen Material eine Textur, wie beispielsweise Mold-Tech 11006 mit einer gemittelten Rautiefe R_{Z} von 0,25 Millimeter und einer maximalen Einzelrautiefe R_{M} von 3,05 Millimeter, oder eine raue Oberfläche des Kunststoffs auf, welche aufgrund der Dichte und Tiefe der Struktur geeignet ist gerichtetes Licht in Streulicht zu wandeln und daher weniger Licht reflektiert wird.

Fig. 4 zeigt eine schematische Darstellung einer Vorrichtung zur automatischen Lagerhaltung und Lagerverwaltung mit offenem Regal- / Trägersystem 41, wobei hier Lagerstellen 30 durch einfache Fachböden eines Regals repräsentiert sein können und explizit über keine Rückwand verfügen. Wird nun ein Greifersystem 20 vor einer leeren Lagerstelle 30 positioniert und das Strichcodelesegerät versucht einen Strichcode zu lesen, wird das Ziel beleuchtet und auf Basis des reflektierten Lichts kann dann über geeignete Algorithmen die Ermittlung eines Strichcodes durchgeführt werden.
Im Fall einer leeren Lagerstelle führt dies, aufgrund der nicht vorhandenen Rückwand, zu einer nicht reflektierten Lichtkeule 50, was wiederum direkten Einfluss auf den Grauwert, bzw. die Belichtungszeit des Strichcodelesegeräts hat.

In der Druckweiterverarbeitung ist es möglich jedes bedruckte Objekt zusätzlich mit einem Strichcode zu versehen. Damit ist es möglich jedem Objekt 32, anhand des Strichcodes, eine unterschiedliche Nachbearbeitung zukommen zu lassen. Fig. 4 zeigt exemplarisch einen Anleger für die Druckweiterverarbeitung. Dazu kann beim Vereinzeln der Objekte 32 der jeweilige Strichcode eingelesen werden und das Objekt 32 dementsprechend den entsprechenden Nachbearbeitungsschritten zugeführt werden. Befindet sich in der Lagerstelle 30 an der dem Strichcodelesegerät gegenüberliegenden Stelle eine Aussparung, eine schwarze texturierte Fläche, oder eine Fläche die verhindert, dass Licht zum Empfangsteil des Strichcodelesegeräts reflektiert wird, so kann mithilfe des vorgeschlagenen Verfahrens ohne die Notwendigkeit weiterer Sensoren festgestellt werden, ob aufgrund einer unreflektierten Lichtkeule 50, aufgrund von Streulicht, oder aufgrund von abgelenktem Licht, keine weiteren Objekte 32 in der Lagerstelle 30 zur Verfügung stehen, oder ob ein Objekt ohne Strichcode 31 eingelegt wurde, was die folgenden Abläufe im Prozess bzw. die Anwenderanleitung für den Fehlerfall beeinflusst.

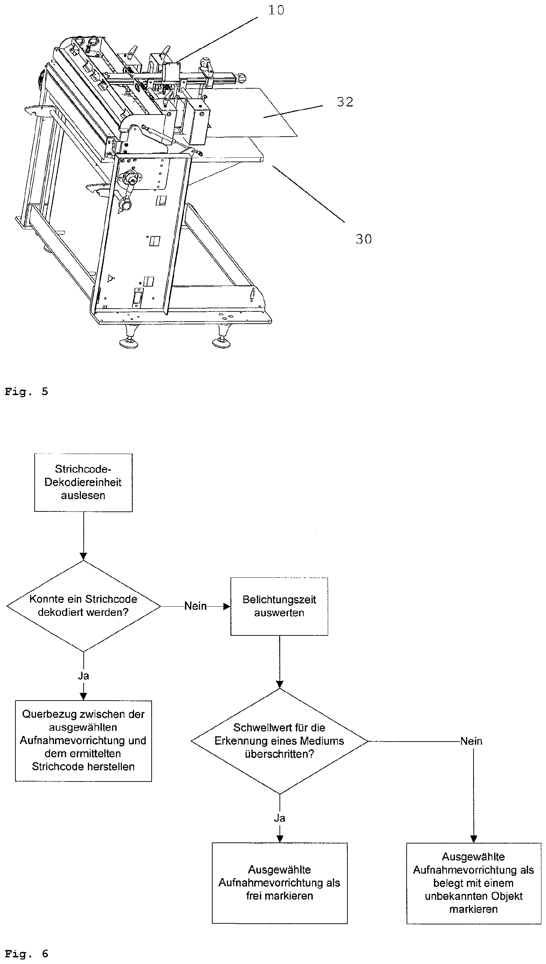

Das vorgeschlagene Verfahren für Strichcodelesegeräte 10 mit automatischer Belichtungskontrolle wird anhand des Ablaufdiagramms in Fig. 6 näher beschrieben. Hierbei würde das Strichcodelesegerät 10 vor einer Lagerstelle 30 positioniert. Daraufhin würde das Strichcodelesegerät das Ziel mittels der Beleuchtungseinheit 12 beleuchten, um anhand des reflektierten Lichts zu versuchen einen möglichen Strichcode zu dekodieren. Systeme mit automatischer Belichtungszeit würden dabei die Belichtungszeit anpassen, um den Kontrast zu optimieren. Kann nun kein Strichcode ermittelt werden, so bietet das vorgeschlagene Verfahren die Möglichkeit die Belichtungszeit auszuwerten, um daraufhin über einen Schwellwert zu entscheiden, ob ein Objekt ohne Strichcode in der Lagerstelle identifiziert werden konnte, oder dieselbe leer ist. Diese Erkennung ist für automatisierte Geräte von entscheidender Bedeutung.

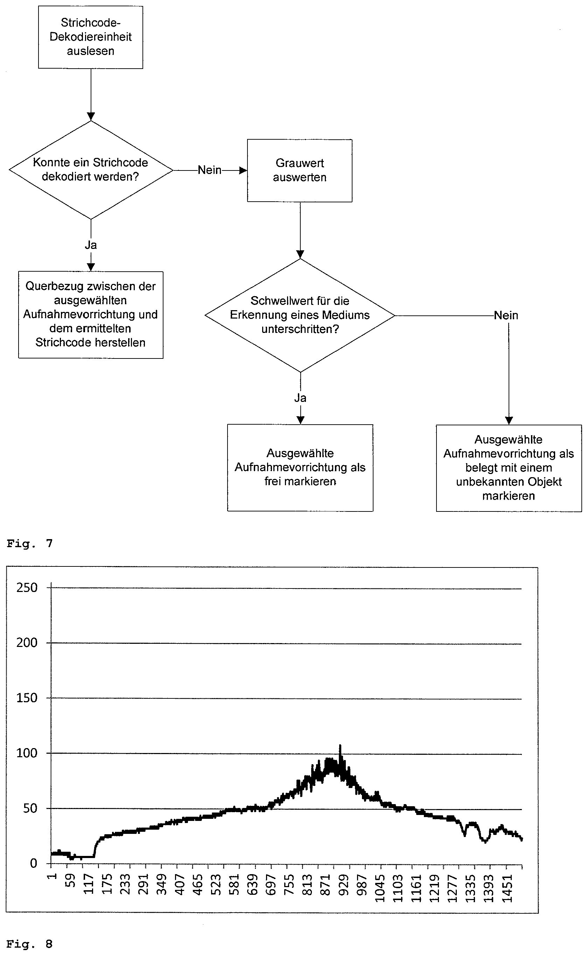

Im Falle der Verwendung von Strichcodelesegeräten 10 mit fester Belichtungszeit, beschreibt das Ablaufdiagramm in Fig. 7, wie im Fall eines nicht dekodierten Strichcodes weiter verfahren werden kann, um festzustellen, ob sich ein Objekt ohne Strichcode 31 in der Lagerstelle 30 bestellen, ob sich ein Objekt ohne Strichcode 31 in der Lagerstelle 30 befindet, oder die Lagerstelle 30 leer ist. Hierzu würde der ermittelte Grauwert des Zielobjekts ausgewertet und dann anhand eines Schwellwerts entschieden, ob ein Objekt ohne Strichcode in der Lagerstelle identifiziert werden konnte, oder dieselbe leer ist. Denn wie bereits erwähnt, ist die Erkennung für automatisierte Geräte von entscheidender Bedeutung.

Fig. 8 zeigt ein Diagramm, welches den Grauwert über dem jeweiligen Element / Pixel / Zelle eines 1500 Elemente / Pixel / Zellen umfassenden photosensiblen Mediums, anhand der Lichtmenge, welche von einer gelben LTO-Kassette in einer Lagerstelle reflektiert wird, aufzeichnet.

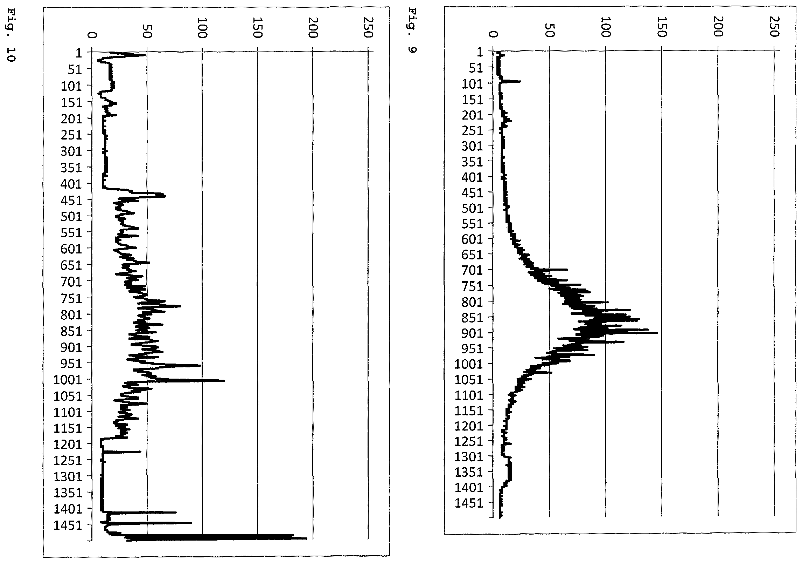

Fig. 9 zeigt ein Diagramm, welches den Grauwert über dem jeweiligen Element / Pixel / Zelle eines 1500 Elemente / Pixel / Zellen umfassenden photosensiblen Mediums, anhand der Lichtmenge, welche von einer schwarzen LTO-Kassette in einer Lagerstelle reflektiert wird, aufzeichnet.

Fig. 10 zeigt ein Diagramm, welches den Grauwert über dem jeweiligen Element / Pixel / Zelle eines 1500 Elemente / Pixel / Zellen umfassenden photosensiblen Mediums, anhand der Lichtmenge, welche von einer leeren Lagerstelle reflektiert wird, aufzeichnet. Auffällig hierbei ist, dass sich der Grauwert der Elemente / Zellen / Pixel, welche sich in der Nähe des rechten Randbereichs des Diagramms befinden, deutlich vom Grauwert der weiter links befindlichen Elemente / Zellen / Pixel abweicht. Dies lässt darauf schließen, dass hier die Seitenwand zur nächstgelegenen Lagerstelle Licht reflektiert, was jedoch durch die Mittelwertbildung über alle Elemente / Zellen / Pixel der Erkennung einer leeren Lagerstelle nicht hinderlich im Wege steht.

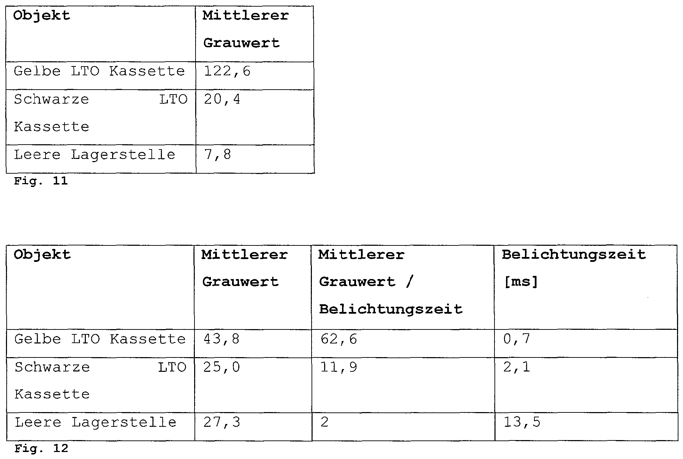

Fig. 11 zeigt eine Tabelle, welche die mittleren Grauwerte der verschiedenen Objekte aus Fig. 8 bis Fig. 10 bei einer festen Belichtungszeit von zwei Millisekunden darstellt. Dabei wird deutlich, dass sich der mittlere Grauwert, welcher sich beispielsweise aus dem arithmetischen Mittelwert der Einzelgrauwerte der entsprechenden Elemente / Zellen / Pixel eines photosensiblen Mediums ermittelt, für eine gelbe LTO Kassette, welche sich in einem Magazin 40, wie in Fig. 3. dargestellt befindet und ein Objekt 31 ohne Strichcode darstellt, signifikant von einer schwarzen LTO Kassette, welche sich ebenfalls in einem Magazin 40, wie in Fig. 3 dargestellt, befindet und auch ein Objekt 31 ohne Strichcode darstellt, abhebt, wobei sich auch der mittlere Grauwert dieser schwarze LTO Kassette deutlich vom mittleren Grauwert einer leeren Lagerstelle 30 unterscheidet.

Fig. 12 zeigt eine Tabelle, welche die mittleren Grauwerte, die mittleren Grauwerte bezogen auf die Belichtungszeit und die Belichtungszeit der verschiedenen Objekte aus Fig. 8 bis Fig. 12 für eine Strichcodelesevorrichtung 10 mit automatischer Belichtungskontrolle darstellt. Daraus wird einerseits ersichtlich, dass eine Strichcodelesevorrichtung 10 mit automatischer Belichtungskontrolle Vorteile die Erkennung und Bestimmung der Anwesenheit von Objekten in Lagerstellen mithilfe eines Strichcodelesegeräts 10 aufweist, da sich die Belichtungszeit für eine leere Lagerstelle 30 noch deutlicher von den Lagerstellen 30 mit Objekten ohne Strichcode 31 unterscheidet, als dies aus dem Grauwert selbst abzuleiten ist. Dementsprechend weist auch der mittlere Grauwert bezogen auf die Belichtungszeit diese deutlichen Unterschiede auf.

Es ist zu beachten, dass das Verfahren und die Vorrichtungen nicht nur auf die oben genannten Beispiele einzuschränken sind. Vielmehr ist der grundsätzliche Ansatz auf Systemen anzuwenden, die Strichcodelesegeräte zur Bestimmung der Anwesenheit von Objekten in Lagerstellen heranziehen.

### Bezugszeichenliste

- 10: Strichcodelesegerät
- 11: Empfangseinheit zur Erfassung des Strichcodes
- 12: Beleuchtungseinheit
- 20: Greifersystem
- 21: Greiferzangen
- 30: Lagerstelle
- 31: Objekt ohne Strichcode
- 32: Objekt mit Strichcode
- 40: Magazin mit Rückwand bestehend aus einer Summe von Lagerstellen
- 41: Offenes Regal- / Trägersystem bestehend aus einer Summe von Lagerstellen
- 50: Unreflektierte Lichtkeule

## Patentansprüche

1. Ein Verfahren zur Erkennung und zur Bestimmung der Anwesenheit von Objekten in mindestens einer Lagerstelle, die keine spezielle Reflexionsfläche aufweisen, mithilfe eines auf einer Transporteinheit befestigten Strichcodelesegeräts, das mit einer Kontrolleinheit verbunden ist, die die Zuordnung von Objekten zur Lagerstelle verwaltet, umfassend die Schritte:
- automatisches Positionieren durch die Transporteinheit des Strichcodelesegeräts an der Lagerstelle,
- Versuch des Erkennens eines Strichcodes,
- falls die Erkennung nicht erfolgreich war, Versuch des Erkennens, ob ein Objekt in der Lagerstelle vorhanden ist, anhand von Informationen, aus denen sich ein Grauwert ableiten lässt,
- Bereitstellen des Ergebnisses an die Kontrolleinheit;
wobei das Strichcodelesegerät eine Vielzahl von photosensiblen Elementen aufweist und der Grauwert über die einzelnen photosensiblen Elemente gemittelt wird, und wobei vorzugsweise das Strichcodelesegerät ein lineares, oder mehrdimensionales digitales Bilddatensystem ist;
**dadurch gekennzeichnet, dass** die Lagerstellen aus schwarzem Kunststoff gefertigt sind, der schwarze Kunststoff zumindest an der Rückwand eine schwarze, texturierte Fläche oder eine Fläche aufweist, die verhinder, dass Licht zu einem Empfangsteil des Strichcodelesegeräts reflektiert wird.

2. Verfahren nach dem vorhergehenden Anspruch 1, **dadurch gekennzeichnet, dass** das Strichcodelesegerät mit einer automatischen Belichtungskontrolle arbeitet, und die Informationen, aus denen sich der Grauwert ableiten lässt, die Belichtungszeit ist, wobei wenn die Belichtungszeit einen bestimmten Schwellwert überschreitet, dann ist von einer leeren Lagerstelle auszugehen.

3. Verfahren nach Anspruch 1, **dadurch gekennzeichnet, dass** das Strichcodelesegerät mit einer festen Belichtungszeit arbeitet, und die Informationen, aus denen sich der Grauwert ableiten lässt, der Grauwert selber ist, wobei, wenn der Grauwert einen bestimmten Schwellwert unterschreitet, dann ist von einer leeren Lagerstelle auszugehen.

4. Verfahren nach Anspruch 2 oder 3, wobei das Strichcodelesegerät über eine Schnittstelle die Belichtungszeit oder den Grauwert an eine übergeordnete Kontrolleinheit überträgt, und die übergeordnete Kontrolleinheit die Überprüfung des Schwellwertes vornimmt, und wobei das Strichcodelesegerät vorzugsweise über die Schnittstelle sowohl Informationen über den erkannten Strichcode übermittelt, als auch die Belichtungszeit oder den Grauwert.

5. Verfahren nach einem oder mehreren der vorhergehenden Ansprüche, **gekennzeichnet dadurch, dass** wobei die Textur eine gemittelte Rautiefe R_{Z} von 0,25 Millimeter und eine maximalen Einzelrautiefe R_{M} von 3,05 Millimeter aufweist.

6. Verfahren nach einem oder mehreren der vorhergehenden Ansprüche, **gekennzeichnet dadurch, dass** die Transporteinheit vorzugsweise ein Roboter ist.

7. Verfahren nach einem oder mehreren der vorhergehenden Ansprüche, **gekennzeichnet dadurch, dass** das Verfahren Teil eines Systems zur automatischen Lagerhaltung und Lagerverwaltung von Objekten ist, und vorzugsweise eines von den folgenden Systemen ist:
- automatische Medienaustauschvorrichtung
- ein Kommissionierautomat bzw. ein Kommissioniersystem
- eine Selbstbedienungskasse
- eine Druckmaschine oder Druckweiterverarbeitungsmaschine
- ein Laborautomatisierungssystem

8. Eine Vorrichtung zur Erkennung und zur Bestimmung der Anwesenheit von Objekten in mindestens einer Lagerstelle, die keine spezielle Reflexionsfläche aufweist,
- mit einem Strichcodelesegerät, das mit einer Kontrolleinheit verbunden ist, das die Zuordnung von Objekten zur Lagerstelle verwaltet, und das Strichcodelesegerät ist auf einer Transporteinheit befestigten, wobei die Transporteinheit erlaubt, das Strichcodelesegeräts automatisiert an der jeweilige Lagerstellen zu positionieren,
- mit einem Erkennungssystem, das ausgebildet ist, um einen Strichcode zu erkennen, und falls die Erkennung nicht erfolgreich war, um anhand von Informationen, aus denen sich ein Grauwert ableiten lässt, zu erkennen, ob ein Objekt in der Lagerstelle vorhanden ist, um dann das Ergebnisses an die Kontrolleinheit bereitzustellen; wobei das Strichcodelesegerät eine Vielzahl von photosensiblen Elementen aufweist und der Grauwert über die einzelnen photosensiblen Elemente gemittelt wird, und wobei das Strichcodelesegerät vorzugsweise ein lineares oder mehrdimensionales digitales Bilddatensystem ist,
**dadurch gekennzeichnet, dass** die Lagerstellen aus schwarzem Kunststoff gefertigt sind, der schwarze Kunststoff zumindest an der Rückwand eine schwarze, texturierte Fläche oder eine Fläche aufweist, die verhinder, dass Licht zu einem Empfangsteil des Strichcodelesegeräts reflektiert wird.

9. Vorrichtung nach Anspruch 8, **dadurch gekennzeichnet, dass** das Strichcodelesegerät mit einer automatischen Belichtungskontrolle arbeitet, und die Informationen, aus denen sich der Grauwert ableiten lässt, die Belichtungszeit ist, wobei, wenn die Belichtungszeit einen bestimmten Schwellwert überschreitet, dann ist von einer leeren Lagerstelle auszugehen.

10. Vorrichtung nach Anspruch 8, **dadurch gekennzeichnet, dass** das Strichcodelesegerät mit einer festen Belichtungszeit arbeitet, und die Informationen, aus denen sich der Grauwert ableiten lässt, der Grauwert selbst ist, wobei, wenn der Grauwert einen bestimmten Schwellwert unterschreitet, dann ist von einer leeren Lagerstelle auszugehen.

11. Vorrichtung nach Anspruch 9 oder 10, wobei das Strichcodelesegerät über eine Schnittstelle die Belichtungszeit oder den Grauwert an die Kontrolleinheit überträgt, und die Kontrolleinheit die Überprüfung des Schwellwertes vornimmt, und wobei das Strichcodelesegerät vorzugsweise über die Schnittstelle sowohl Informationen über den erkannten Strichcode übermittelt, als auch die Belichtungszeit oder den Grauwert.

12. Vorrichtung nach einem oder mehreren der vorhergehenden Ansprüche 8 bis 11, **gekennzeichnet dadurch, dass** die Textur vorzugsweise eine gemittelte Rautiefe R_{Z} von 0,25 Millimeter und eine maximalen Einzelrautiefe R_{M} von 3,05 Millimeter aufweist.

13. Vorrichtung nach einem oder mehreren der vorhergehenden Vorrichtungsansprüche 8 bis 12, **gekennzeichnet dadurch, dass** das Strichcodelesegerät auf einer Transporteinheit montiert ist, wobei die Transporteinheit vorzugsweise ein Roboter ist.

14. Vorrichtung nach einem oder mehreren der vorhergehenden Vorrichtungsansprüche 8 bis 13, **gekennzeichnet dadurch, dass** die Vorrichtung Teil eines Systems zur automatischen Lagerhaltung und Lagerverwaltung von Objekten ist und wobei das System zur automatischen Lagerhaltung und Lagerverwaltung von Objekten vorzugsweise eines der folgenden Systeme ist:
- automatische Medienaustauschvorrichtung
- ein Kommissionierautomat bzw. ein Kommissioniersystem
- eine Selbstbedienungskasse
- eine Druckmaschine oder Druckweiterverarbeitungsmaschine
- ein Laborautomatisierungssystem

## Claims

1. Method for detecting and determining the presence of objects in at least one storage location that is not having a specific reflective surface via a bar code reading device which is mounted on a transport unit and is connected to a control unit managing the assignment of objects to the storage location, comprising the steps:
- automatically positioning by the transport unit of the bar code reading device at the storage location,
- attempting to recognize a bar code,
- if the detection is not successful, attempting to determine whether an object is present in the storage location, on the basis of information from which a gray value can be derived,
- providing the result to the control unit;
wherein the bar code reading device comprises a plurality of photo-sensible elements and the gray value is averaged over the single photo-sensible elements, and wherein the bar code reading device preferably is a linear, or multi-dimensional digital image-data-system;
**characterized in that** the storage locations are made of black plastic material, wherein the black plastic material has, at least at the rear wall, textured surface or a surface preventing light to be reflected to a receiving portion of the bar code reading device.

2. Method according to claim 1, **characterized in that** the bar code reading device operates with an automatic illumination control, and the information from which the gray value can be derived is the illumination time, wherein if the illumination time exceeds a certain threshold then the storage location is considered to be empty.

3. Method according to claim 1, **characterized in that** the bar code reading device operates with a fixed illumination time, and the information from which the gray value can be derived is the gray value itself, wherein if the gray value falls below a certain threshold then the storage location is considered to be empty.

4. Method according to claim 2 or 3, wherein the bar code reading device transmits the illumination time or the gray value to a superordinated control unit via an interface, and the superordinated control unit performs the check of the threshold, and wherein the bar code reading device receives information about the detected bar code as well as the illumination time or the gray value preferably via the interface.

5. Method according to one or more of the preceding claims, **characterized in that** the texture has an average depth of roughness R_{z} of 0.25 millimeters and a maximum single depth of roughness of 3.05 millimeters.

6. Method according to one or more of the preceding claims, **characterized in that** transport unit preferably is a robot.

7. Method according to one or more of the preceding claims, **characterized in that** the method is part of a system for the automatic storage and storage management of objects and is preferably one of the following systems:
- an automatic media exchange device
- a picking machine or a picking system
- a self-service cash register
- a printing machine or a print processing machine
- a laboratory automation system.

8. Device for detecting and determining the presence of objects in at least one storage location which does not have a specific reflection surface,
- with a bar code reading device that is connected to a control unit which manages the allocation of objects to the storage location and the bar code reading device is mounted on a transport unit, wherein the transport unit allows the bar code reading device to be automatically positioned at the respective storage locations,
- with a detection system that is configured to detect a bar code and if the detection has not been successful in order to determine whether an object is present in the storage location via information from which a gray value can be derived to provide the result to the control unit;
wherein the bar code reading device comprises a plurality of photo-sensible elements and the gray value is averaged over the individual photo-sensible elements, and wherein the bar code reading device preferably is a linear or multidimensional digital image data system,
**characterized in that** the storage locations are made of black plastic material, wherein the black plastic material has, at least at the rear wall, textured surface or a surface preventing light to be reflected to a receiving portion of the bar code reading device.

9. Device according to claim 8, **characterized in that** the bar code reading device operates with an automatic illumination control, and the information from which the gray value can be derived is the illumination time, wherein if the illumination time exceeds a certain threshold then the storage location is considered to be empty.

10. Device according to claim 8, **characterized in that** the bar code reading device operates with a fixed illumination control, and the information from which the gray value can be derived is the illumination time, wherein if the illumination time exceeds a certain threshold then the storage location is considered to be empty.

11. Device according to claim 9 or 10, wherein the bar code reading device transmits the illumination time or the gray value to the control unit via an interface, and the control unit performs a check of the threshold value, and wherein the bar code reading device preferably transmits information about the recognized bar code, as well as the illumination time or the gray value, via the interface.

12. Device according to one or more of the preceding claims 8 to 11, **characterized in that** the texture preferably has an average roughness depth R_{z} of 0.25 millimeters and a maximum single roughness depth of 3.05 millimeters.

13. Device according to one or more of the preceding device claims 8 to 12, **characterized in that** the bar code reading device is mounted on a transport unit, wherein the transport unit preferably is a robot.

14. Device according to one or more of the preceding device claims 8 to 13, **characterized in that** the device is part of a system for the automatic storage and storage management of objects and the system for the automatic storage keeping and storage management of objects is preferably one of the following systems:
- an automatic media exchange device
- a picking machine or a picking system
- a self-service cash register
- a printing machine or a print processing machine
- a laboratory automation system.

## Revendications

1. Un procédé de détection et de détermination de la présence d'objets dans au moins un emplacement de stockage ne comportant aucune surface réfléchissante spécifique à l'aide d'un dispositif de lecture de code barres qui est monté sur une unité de transport et connectée à une unité de commande qui gère l'affectation des objets à l'emplacement de stockage, comprenant les étapes :
- un positionnement automatique à l'emplacement de stockage du dispositif de lecture de code barres par l'unité de transport,
- une tentative de reconnaissance d'un code barres,
- en cas de détection infructueuse, tenter de déterminer si un objet est présent dans l'emplacement de stockage, sur la base d'une information à partie de laquelle une valeur de gris peut être dérivée,
- fournir le résultat à l'unité de commande ;
dans lequel le dispositif de lecture de code barres comporte une pluralité d'éléments photo-sensibles et la valeur de gris est moyennée sur la base des seuls éléments photo-sensibles, et dans lequel le dispositif de lecture de code barres est de préférence un système de données d'imagerie numérique linéaire ou multidimensionnel ; **caractérisé en ce que** les emplacements de stockage sont réalisés en matériau plastique noir, dans lequel le matériau plastique noir a, au moins au niveau de la paroi arrière, une surface texturée ou une surface empêchant la réflexion de la lumière vers la partie de réception du dispositif de lecture de code barres.

2. Le procédé selon la revendication 1, **caractérisé en ce que** le dispositif de lecture de code barres fonctionne avec une commande d'exposition automatique, et les informations à partir desquelles peut être dérivée la valeur de gris est le temps d'exposition, dans lequel, si le temps d'exposition dépasse un certain seuil, alors il doit être d'un emplacement de stockage vide.

3. Le procédé selon la revendication 1, **caractérisé en ce que** le lecteur de code à barres avec un temps d'exposition fixe est au travail, et les informations à partir desquelles peut être dérivée la valeur de gris est la valeur de gris elle-même, dans lequel, lorsque la valeur de gris est inférieure à un certain seuil, alors l'emplacement de stockage est considéré comme étant vide.

4. Le procédé selon la revendication 2 ou 3, dans lequel le dispositif de lecture de code à barres transmet via une interface le temps d'exposition ou la valeur de gris à une unité de commande de niveau supérieur, et l'unité de commande de niveau supérieur effectue la vérification de la valeur de seuil, et dans lequel le dispositif de lecture de code barres reçoit via l'interface l'information relative au code barres détecté ainsi que le temps d'exposition ou la valeur de gris.

5. Le procédé de l'une ou plusieurs des revendications précédentes, dans lequel la texture a de préférence une rugosité de surface moyenne R_{z} égale à 0,25 millimètres et une rugosité maximale égale à 3,05 millimètres.

6. Le procédé selon l'une ou plusieurs des revendications précédentes, **caractérisé en ce que** l'unité de transport est de préférence un robot.

7. Le procédé selon l'une ou plusieurs des revendications précédentes, **caractérisé en ce que** le procédé fait partie d'un système de commande de stockage et d'inventaire automatique d'objets, et est de préférence l'une quelconque des systèmes suivants:
- un dispositif d'échange automatique de médias,
- une machine de prélèvement ou d'un système de prélèvement
- une caisse en libre-service
- un machine d'impression ou une machine de traitement d'impression ;
- un système d'automatisation de laboratoire

8. Un dispositif pour détecter et déterminer la présence d'objets dans au moins un emplacement de stockage qui ne comporte pas de surface réfléchissante spécifique,
- avec un dispositif de lecture de code barres qui est connecté à une unité de commande qui gère l'affectation des objets à l'emplacement de stockage et le dispositif de lecture de code barres est monté sur une unité de transport, dans lequel l'unité de transport permets un positionnement automatique du dispositif de lecture de code barres aux emplacements de stockages respectifs,
- avec un système de détection qui est configuré pour détecter un code barres et en cas d'échec de détection pour déterminer si un objet est présent dans l'emplacement de stockage via une information à partir de laquelle une valeur de gris peut être dérivée pour fournir un résultat à l'unité de commande ;
dans lequel le dispositif de lecture de code barre comporte une pluralité d'éléments photo-sensibles et la valeur de gris est moyennées sur les éléments photo-sensibles individuels, et dans lequel le dispositif de lecture de code barres est de préférence un système de données d'images numérique linéaire ou multidimensionnel,
**caractérisé en ce que** les emplacements de stockage sont réalisés en matériau plastique noire, dans lesquels le matériau plastique noir comporte, au moins au niveau du panneau arrière, une surface texturée ou une surface empêchant la réflexion de la lumière vers une partie de récepteur du dispositif de lecture de code barres.

9. Le dispositif de la revendication 9, **caractérisé en ce que** le dispositif de lecture de code barres fonctionne avec une fonction de commande d'exposition automatique, et les informations à partir desquelles peut être dérivée la valeur de gris est le temps d'exposition, dans lequel, si le temps d'exposition dépasse un certain seuil, alors l'emplacement de stockage est considéré comme étant vide.

10. Le dispositif de la revendication 9, **caractérisé en ce que** le dispositif de lecture de code barres fonctionne avec une fonction de commande d'exposition fixe, et les informations à partir desquelles peut être dérivée la valeur de gris est le temps d'exposition, dans lequel, si le temps d'exposition dépasse un certain seuil, alors l'emplacement de stockage est considéré comme étant vide.

11. Le dispositif selon la revendication 9 ou 10, dans lequel le dispositif de lecture de codes barres transmis par l'intermédiaire d'une interface le temps d'exposition ou de la valeur de gris à l'unité de commande, et l'uité de commande effectue une vérification de la valeur de seuil, et dans lequel le dispositif de lecture du code barre transmet via l'interface de préférence une information relative au code barre reconnu, ainsi que le temps d'exposition ou la valeur de gris.

12. Le dispositif selon une ou plusieurs des revendications 8 à 11, dans lequel la texture a de préférence une rugosité de surface moyenne R_{z} égale à 0,25 millimètres et une rugosité maximale égale à 3,05 millimètres.

13. Le dispositif selon une ou plusieurs des revendications précédentes 8 à 12, **caractérisé en ce que** le dispositif de lecture de code barres est monté sur une unité de transport, l'unité de transport étant de préférence un robot.

14. Le dispositif selon une ou plusieurs des revendications précédentes 8 à 13, **caractérisé en ce que** le dispositif fait partie d'un système pour le stockage automatique et la gestion des stocks d'objets et dans lequel le système de contrôle de stockage automatique et de gestion de stocks d'objets est de préférence:
- un dispositif d'échange automatique de médias,
- une machine de prélèvement ou d'un système de prélèvement
- une caisse en libre-service
- un machine d'impression ou une machine de traitement d'impression ;
- un système d'automatisation de laboratoire
